# EUROPÄISCHE PATENTANMELDUNG

(11) **EP 2 778 810 A1**
(43) Veröffentlichungstag der Anmeldung: **17.09.2014**
(21) Anmeldenummer: 13159027.5
(22) Anmeldetag: 13.03.2013
(51) Int. Cl.: G05B 19/042, G05B 19/418

(54) **Automatisierungskomponente mit einer Schnittstelle und Verfahren zum Betrieb**

(71) Anmelder: Siemens Aktiengesellschaft, 80333 München (DE)
(72) Erfinder: Fischer, Peter, 92421 Schwandorf (DE); Reiss, Herbert, 92256 Hahnbach (DE); Eckl, Wolfgang, 91207 Lauf (DE)

(57) **Zusammenfassung**

Die Erfindung betrifft eine Automatisierungskomponente (1) ausgestaltet für den Einsatz in einem Automatisierungsumfeld zur Automatisierung eines industriellen Prozesses (2), umfassend
- ein Gehäuse (10),
- eine funktionelle Einheit (11) aus integrierten und/oder diskreten elektronischen Bauelementen zum Erfüllen einer Automatisierungsaufgabe sowie
- einen Mikrokontroller (12) und
- eine Datenschnittstelle (13) zum Auslesen von Daten,
wobei die Datenschnittstelle (13) eine Schnittstellenvorrichtung (20) aufweist, welche
umfasst
- einen Schnittstellenspeicher (21),
- ein Steuermittel (22) zur Bereitstellung einer Versorgungsspannung (23a,23b) für die Schnittstellenvorrichtung (20),
- eine Funkeinheit (24) mit einem Antennenanschluss (25),
- eine Gleichrichtereinheit (26),
- eine Antennenanordnung (27),
wobei die Funkeinheit (24) an die Antennenanordnung (27) angeschlossen ist und ausgestaltet ist ein über die Antennenanordnung (27) empfangenes Wechselsignal der Gleichrichtereinheit (26) zuzuführen, welche ausgestaltet ist das Wechselsignal gleich zurichten und mittels des Steuermittels (22) der Schnittstellenvorrichtung (20) eine autarke Versorgungsspannung (23a) zur Verfügung zu stellen, wodurch Daten, welche in dem Schnittstellenspeicher (21) hinterlegt sind, von der Datenschnittstelle (13) gelesen werden können ohne dass eine externe Versorgungsspannung (23b) vorhanden ist.

## Beschreibung

Die Erfindung betrifft eine Automatisierungskomponente ausgestaltet für den Einsatz in einem Automatisierungsumfeld zur Automatisierung eines industriellen Prozesses, umfassend ein Gehäuse, eine funktionelle Einheit aus integrierten und/oder diskreten elektronischen Bauelementen zum Erfüllen einer Automatisierungsaufgabe sowie einen Mikrocontroller und eine Datenschnittstelle zum Auslesen von Daten.

Automatisierungskomponenten besitzen in der Regel Identifikations-Daten und/oder Wartungs-Daten, mit der eine Automatisierungskomponente eindeutig identifiziert werden kann. Diese Daten wurden bisher drahtgebunden durch einen Stellvertreter, wie z.B. eine übergeordnete speicherprogrammierbare Steuerung, ausgelesen und an ein wiederum übergeordnetes Engineering-System gemeldet. Von Nachteil ist es dabei, dass die Automatisierungskomponente mit einer externen Versorgungsspannung versorgt werden muss.

Es ist Aufgabe der vorliegenden Erfindung eine Automatisierungskomponente bereitzustellen, bei welcher es ermöglicht wird, Identifikations-Daten und/oder Wartungs-Daten auszulesen, ohne dass eine externe Versorgungsspannung an die Automatisierungskomponente angelegt ist.

Die Automatisierungskomponente gemäß den Merkmalen des Oberbegriffes des Anspruchs 1 löst die Aufgabe dadurch, dass die Datenschnittstelle eine Schnittstellenvorrichtung aufweist, welche umfasst einen Schnittstellenspeicher, ein Steuermittel zur Bereitstellung einer Versorgungsspannung für die Schnittstellenvorrichtung, eine Funkeinheit mit einem Antennenanschluss, eine Gleichrichtereinheit, eine Antennenanordnung, wobei die Funkeinheit an die Antennenanordnung angeschlossen ist und ausgestaltet ist ein über die Antennenanordnung empfangenes Wechselsignal der Gleichrichtereinheit zuzuführen, welche ausgestaltet ist das Wechselsignal gleichzurichten und mittels des Steuermittels der Schnittstellenvorrichtung eine autarke, interne Versorgungsspannung zur Verfügung zu stellen, wodurch Daten, welche in dem Schnittstellenspeicher hinterlegt sind, von der Datenschnittstelle gelesen werden können, ohne dass eine externe Versorgungsspannung vorhanden ist. Durch das Ausnutzen der Energie, welche über ein Funksignal in eine Antennenanordnung eingespeist wird, können auf vorteilhafte Weise ohne das Anlegen einer externen Versorgungsspannung Daten aus der Automatisierungskomponente ausgelesen werden.

Damit zur Bereitstellung einer Versorgungsspannung ausreichend Energie in die Antennenanordnung eingespeist werden kann, ist die Antennenanordnung vorzugsweise als eine Flachspule ausgestaltet.

In einer Ausgestaltungsvariante ist die Flachspule auf der funktionellen Einheit auf einer Leiterplatte angeordnet.

In einer anderen Ausgestaltung ist die Flachspule auf einer Innenseite oder innerhalb des Gehäuses angeordnet.

In einer besonders optimierten Ausgestaltung der Automatisierungskomponente im Hinblick auf die auszulesenden Identifikations-Daten und/oder Wartungs-Daten sind mit Vorteil in dem Schnittstellenspeicher die Identifikations-Daten und/oder Wartungs-Daten gespeichert, welche zumindest eine der folgenden Datenart aufweisen, Bestellnummer, eindeutige Seriennummer, Ausgabestand, Einbaudatum, Anlagenkennzeichen, Klemmenbelegungsplan von Aus-/Eingangsklemmen der Komponente, Diagnosedaten.

Von besonderen Vorteil für das Auslesen von Daten aus der Automatisierungskomponente ist es, wenn die Antennenanordnung ausgestaltet ist, eine drahtlose Kommunikation zwischen einen tragbaren elektronischen Gerät mit einer Gegenantenne ausschließlich in einem Annäherungsbereich zu ermöglichen, wobei der Annäherungsbereich maximal 10 cm beträgt. Bei einer Kommunikation in einen Bereich von nur ca. 10 cm wird sichergestellt, dass keine unerwünschten zusätzlichen Verbindungen aufgebaut werden kann. Ein Häckerversuch oder sonstige ungewollte störende Verbindungen aus größeren Entfernungen aufzubauen wird damit vermieden. Dies ist ein entscheidender Vorteil zu Wlan-Verbindungen. Es bedeutet, dass bei dieser Nahbereichskommunikation eine Verbindung mit anderen Geräten, welche sich im weiteren Umfeld der Automatisierungskomponente befinden aufgrund der geringen Reichweite nicht aufgebaut werden. Im Gegensatz dazu werden bei beispielsweise Wlan-Verfahren alle Geräte angezeigt, welche sich im weiteren Umfeld befinden. Hält man beispielsweise ein mobiles Funktelefon, vorzugsweise ein Smartphone, in den Bereich einer ausgeschalteten oder spannungslosen Automatisierungskomponente, so wird die Funkeinheit in der Automatisierungskomponente automatisch aktiviert. Aufgrund der Bereitstellung der autarken, internen Versorgungsspannung ist ein Datenaustausch somit auch im ausgeschalteten oder spannungslosen Zustand der Automatisierungskomponente möglich.

Vorzugsweise ist die Funkeinheit derart ausgestaltet um nach einem Übertragungsprotokoll nach dem Standard ISO 15963 und ISO 1800-3 zu arbeiten.

Die eingangs genannte Aufgabe für die Automatisierungskomponente für den Einsatz in einem Automatisierungsumfeld wird ebenfalls durch ein Verfahren zum Auslesen von Daten aus einer Automatisierungskomponente ausgestaltet für den Einsatz in einem Automatisierungsumfeld zur Automatisierung eines industriellen Prozesses durch die Merkmalskombination des unabhängigen Patentanspruchs 8 gelöst. Verfahrensgemäß wird dabei die Datenschnittstelle mit der Schnittstellenvorrichtung derart betrieben, dass ein Schnittstellenspeicher, ein Steuermittel zur Bereitstellung einer Versorgungsspannung für die Schnittstellenvorrichtung, eine Funkeinheit mit einem Antennenanschluss, eine Gleichrichtereinheit und eine Antennenanordnung als ein gemeinsames System betrieben werden, wobei die an die Antennenanordnung angeschlossene Funkeinheit wiederum derart betrieben wird, dass ein über die Antennenanordnung empfangenes Wechselsignal der Gleichrichtereinheit zugeführt wird , welches das Wechselsignal gleichrichtet und mittels des Steuermittels der Schnittstellenvorrichtung eine autarke, interne Versorgungsspannung zur Verfügung stellt.

Bei dem Verfahren werden auf vorteilhafte Weise aus dem Schnittstellenspeicher durch die Aufbereitung der autarken Versorgungsspannung Identifikations-Daten und/oder Wartungs-Daten ausgelesen, wobei zumindest eine der folgenden Datenarten ausgelesen werden, Bestellnummer, eindeutige Seriennummer, Ausgabestand, Einbaudatum, Anlagenkennzeichen, Klemmenbelegungsplan von Aus-/Eingangsklemmen oder der Komponente, Diagnosedaten.

Um weitere störende Funkverbindungen in der Umgebung der Automatisierungskomponente auszuschließen, wird über die Antennenanordnung eine drahtlose Kommunikation zwischen einem tragbaren elektronischen Gerät mit einer Gegenantenne ausschließlich in einem Annäherungsbereich von maximal 10 cm durchgeführt.

Verfahrensgemäß wird die Funkeinheit mit einem Übertragungsprotokoll nach dem Standard ISO 15963 und ISO 18000-3 betrieben.

Im Hinblick eine mögliche Produktpiraterie aufzudecken, wird verfahrensgemäß durch das Auslesen der eindeutigen Seriennummer mit den tragbaren elektronischen Gerät und einem Vergleich der eindeutigen Seriennummer mit einem einen ersten Hersteller zugewiesenen Nummernband von Seriennummer, welches in dem tragbaren Gerät hinterlegt wird, eine Aussage darüber getroffen, ob es sich um eine Komponente von dem ersten Hersteller oder um eine Komponente von einem zweiten Hersteller handelt. Eine nicht von einem originalen Hersteller hergestellte Komponente könnte bereits mit einem elektronischen Gerät, wie z.B. einem Smartphone, in der Verpackung erkannt werden, ohne diese Verpackung zu öffnen.

Beispielsweise erfolgt am Ende einer Produktionskette die Verpackung der Baugruppe und die anschließende Beschriftung der Verpackung mit einem Etikett. Um falsche Verpackungen bzw. nachgemachte Produkte identifizieren zu können, kann anhand der Etikettierung und anhand der drahtlosen Identifizierung der Baugruppe ein mögliches gefälschtes Produkt erkannt werden.

Ein weiterer verfahrensgemäßer Vorteil ist, wenn das tragbare elektronische Gerät als ein virtuelles Display zu der Komponente genutzt wird und mit dem Display eine Programmier-und/oder Parametrierschnittstelle zwischen einem Anwender und der Komponente nachgebildet wird.

Auch wäre es möglich, über die drahtlose Identifikation der Automatisierungskomponente, diese Automatisierungskomponente beispielsweise als eine Baugruppe in einem Rack auf einer Baustelle zu erkennen. Die erkannten und ermittelten Daten könnten dann über eine weitere Funkverbindung beispielsweise die Wlan-Funkverbindung oder das GSM-, UMTS- oder LTE-Netz übertragen werden und somit in ein übergeordnetes Engineering-System gelangen, wo eine automatische Konfiguration eines kompletten Automatisierungsprojektes im Hinblick auf die eingesetzte Automatisierungskomponente gestartet werden kann.

Weitere für die Erfindung relevanten Gedanken sind folgende: Insbesondere bei Kleinsteuerungen, wie z.B. programmierbare Relaissteuerbaugruppen wird heutzutage zwischen einem Grundgerät mit einem Display und einem Grundgerät ohne einem Display unterschieden. Bei Grundgeräten ohne Display könnte die zukünftige Programmierung und/oder Parametrierung über eine drahtlose Kommunikation zwischen beispielsweise einem Smartphone und der Kleinsteuerung erfolgen, wobei im Wesentlichen die drahtlose Programmierung einer Kleinsteuerung unter Verwendung eines Smartphones maßgeblich ist. Dabei könnte die heutige, auf MS-Windows basierende Programmiersoftware, durch eine Smartphone-App ersetzt werden. Weiterhin könnten bestehende Applikationen wie Steuerungen von Schaufensterbeleuchtung, Außenbeleuchtung, Rolladensteuerung usw., wie sie für Kleinsteuerungen typisch sind, als Smartphone-App zur Verfügung gestellt werden.

Als weiterer Vorteil bei der Herstellung von Kleinsteuerungen ergibt sich eine Kostenreduzierung durch den Wegfall von einen Display und/oder einem zusätzlichen Tastenfeld für die Kleinsteuerung.

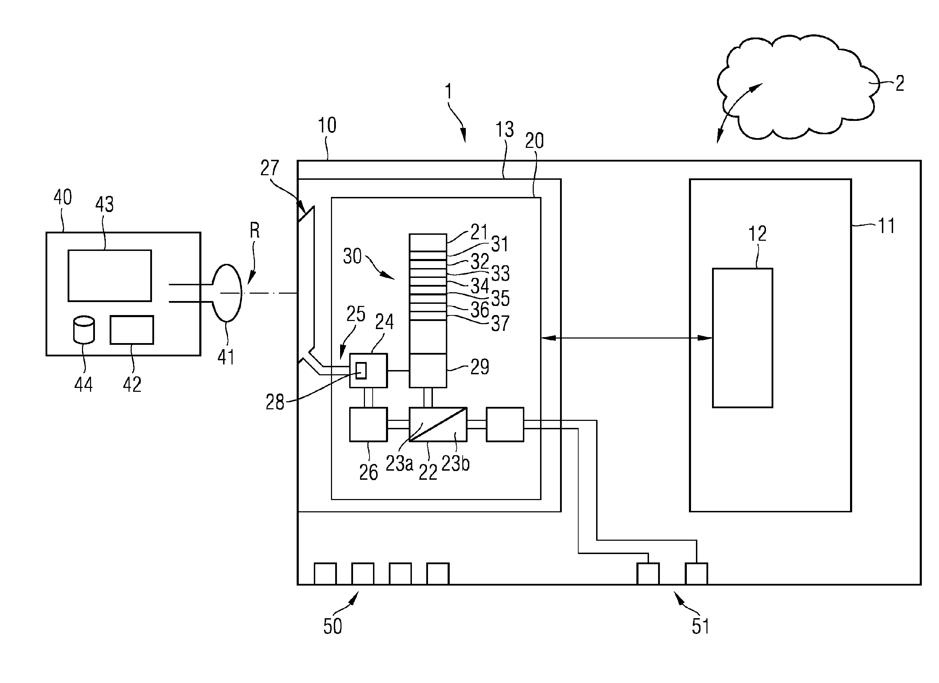

Die Zeichnung zeigt ein Ausführungsbeispiel der Automatisierungskomponente mit einem tragbaren elektronischen Gerät zum Auslesen von Daten.

Gemäß der Figur ist eine Automatisierungskomponente 1 ausgestaltet für den Einsatz in einem Automatisierungsumfeld zur Automatisierung eines industriellen Prozesses 2 dargestellt. Die Automatisierungskomponente 1 umfasst ein Gehäuse 10, eine funktionelle Einheit 11 aufweisend integrierte und/oder diskrete elektronische Bauelemente zum Erfüllen einer Automatisierungsaufgabe sowie einem Mikrocontroller 12 und eine Datenschnittstelle 13.

Die Datenschnittstelle 13 weist wiederum eine Schnittstellenvorrichtung 20 auf. Diese Schnittstellenvorrichtung 20 umfasst einen Schnittstellenspeicher 21, ein Steuermittel 22 zur Bereitstellung einer Versorgungsspannung 23a,23b für die Schnittstellenvorrichtung 20. Weiterhin ist die Schnittstellenvorrichtung 20 mit einer Funkeinheit 24 mit einem Antennenanschluss 25, einer Gleichrichtereinheit 26 und einer Antennenanordnung 27 ausgestaltet.

Bei der Versorgungsspannung 23a,23b, welche durch das Steuermittel 22 geschaltet werden kann, wird zwischen einer autarken, internen Versorgungsspannung 23a und einer autarken, externen Versorgungsspannung 23b unterschieden. Die externe, autarke Versorgungsspannung 23b wird über Versorgungsspannungsklemmen 51 an die Automatisierungskomponente 1 angelegt und wird über Leitungen zur Versorgung der Schnittstellenvorrichtung 20 an diese geführt. Für den Fall, dass eine externe Versorgungsspannung 23b nicht an die Automatisierungskomponente 1 angeschlossen sein sollte, kann ein über die Antennenanordnung 27 empfangenes Wechselsignal der Gleichrichtereinheit 26 zugeführt werden, wobei die Gleichrichtereinheit 26 ausgestaltet ist, dass Wechselsignal gleichzurichten und mittels des Steuermittels 22 der Schnittstellenvorrichtung 20 die autarke, interne Versorgungsspannung 23a zur Verfügung stellen.

Ein an die Automatisierungskomponente 1 in einem Annäherungsbereich R angenähertes tragbares elektronisches Gerät 40 mit einer Gegenantenne 41 würde in die Antennenanordnung 27 ein Feld induzieren, welches innerhalb der Schnittstellenvorrichtung 20 zur autarken, internen Versorgungsspannung 23a verwendet wird.

Mit Hilfe der autarken, internen Versorgungsspannung 23a können Daten, welche in dem Schnittstellenspeicher 21 hinterlegt sind, von der Datenschnittstelle 13 gelesen werden, ohne dass eine externe Versorgungsspannung 23b vorhanden ist.

Um eine Automatisierungskomponente 1 zweifelsfrei identifizieren zu können, sind in dem Schnittstellenspeicher 21 Identifikations-Daten und/oder Wartungs-Daten 30 gespeichert, wobei insbesondere eine Bestellnummer 31, eine eindeutige Seriennummer 32, ein Ausgabestand 33, ein Einbaudatum 34, ein Anlagenkennzeichen 35, ein Klemmenbelegungsplan 36 von Aus-/Eingangsklemmen 50 der Komponente und Diagnosedaten 37 abgespeichert sind.

Ein Speicherverwaltungsmittel 29 ermöglicht den Zugriff auf die zuvor genannten Daten und leitet sie an die Funkeinheit 24 weiter, welche die Daten für eine Funkübertragung aufbereitet und über die Antennenanordnung 27 an die Gegenantenne 41 sendet.

Vorzugsweise werden die Daten mit einem Übertragungsprotokoll 28 gesendet, wobei das Übertragungsprotokoll 28 nach dem Standard ISO 15963 und ISO 18000-3 arbeitet.

Da das mobile tragbare elektronische Gerät 40 ein Display 43 aufweist, können Daten direkt auf dem Display 43 angezeigt werden.

Um eine Baugruppe beispielsweise bereits in einer Verpackung eindeutig identifizieren zu können, wird durch die Abfrage der eindeutigen Seriennummer 32 aus dem Schnittstellenspeicher 21 und einem Vergleich mit einem Nummernband 42, welches in dem tragbaren elektronischen Gerät 40 hinterlegt ist, sichergestellt das es sich hier wirklich um eine Baugruppe handelt, die auch in die dazugehörige Verpackung gehört bzw. eine Baugruppe von einem Originalhersteller ist.

## Patentansprüche

1. Automatisierungskomponente (1) ausgestaltet für den Einsatz in einem Automatisierungsumfeld zur Automatisierung eines industriellen Prozesses (2),
umfassend
- ein Gehäuse (10),
- eine funktionelle Einheit (11) aus integrierten und/oder diskreten elektronischen Bauelementen zum Erfüllen einer Automatisierungsaufgabe sowie
- einen Mikrokontroller (12) und
- eine Datenschnittstelle (13) zum Auslesen von Daten,
**dadurch gekennzeichnet, dass** die Datenschnittstelle (13) eine Schnittstellenvorrichtung (20) aufweist, welche
umfasst
- einen Schnittstellenspeicher (21),
- ein Steuermittel (22) zur Bereitstellung einer Versorgungsspannung (23a,23b) für die Schnittstellenvorrichtung (20),
- eine Funkeinheit (24) mit einem Antennenanschluss (25),
- eine Gleichrichtereinheit (26),
- eine Antennenanordnung (27),
wobei die Funkeinheit (24) an die Antennenanordnung (27) angeschlossen ist und ausgestaltet ist ein über die Antennenanordnung (27) empfangenes Wechselsignal der Gleichrichtereinheit (26) zuzuführen, welche ausgestaltet ist das Wechselsignal gleichzurichten und mittels des Steuermittels (22) der Schnittstellenvorrichtung (20) eine autarke, interne Versorgungsspannung (23a) zur Verfügung zu stellen, wodurch Daten, welche in dem Schnittstellenspeicher (21) hinterlegt sind, von der Datenschnittstelle (13) gelesen werden können ohne dass eine externe Versorgungsspannung (23b) vorhanden ist.

2. Automatisierungskomponente (1) nach Anspruch 1, wobei die Antennenanordnung (27) als eine Flachspule ausgestaltet ist.

3. Automatisierungskomponente (1) nach Anspruch 2, wobei die Flachspule auf der funktionellen Einheit (11) auf einer Leiterplatte angeordnet ist.

4. Automatisierungskomponente (1) nach Anspruch 2, wobei die Flachspule auf einer Innenseite oder innerhalb des Gehäuses (10) angeordnet ist.

5. Automatisierungskomponente (1) nach einem der Ansprüche 1 bis 4, wobei in dem Schnittstellenspeicher (21) Identifikations-Daten und/oder Wartungs-Daten (30) gespeichert sind, welche zumindest eine der folgenden Datenarten aufweisen,
- Bestellnummer (31),
- eindeutige Seriennummer (32),
- Ausgabestand (33),
- Einbaudatum (34),
- Anlagenkennzeichen(35),
- Klemmenbelegungsplan (36) von Aus-/Eingangsklemmen (50) der Komponente,
- Diagnosedaten (37).

6. Automatisierungskomponente (1) nach einem der Ansprüche 1 bis 5, wobei die Antennenanordnung (27) ausgestaltet ist eine drahtlose Kommunikation zwischen einem tragbaren elektronischen Gerät (40) mit einer Gegenantenne (41) ausschließlich in einem Annäherungsbereich (R) zu ermöglichen, wobei der Annäherungsbereich (R) maximal 10 cm beträgt.

7. Automatisierungskomponente (1) nach einem der Ansprüche 1 bis 6, wobei die Funkeinheit (24) ausgestaltet ist um nach einem Übertragungsprotokoll (28) nach dem Standard ISO 15963 und ISO 18000-3 zu arbeiten.

8. Verfahren zum Auslesen von Daten aus einer Automatisierungskomponente (1) ausgestaltet für den Einsatz in einem Automatisierungsumfeld zur Automatisierung eines industriellen Prozesses (2),
umfassend
- ein Gehäuse (10),
- eine funktionelle Einheit (11) aus integrierten und/oder diskreten elektronischen Bauelementen zum Erfüllen einer Automatisierungsaufgabe sowie
- einen Mikrokontroller (12)
- eine Datenschnittstelle (13) zum Auslesen von Daten,
**dadurch gekennzeichnet, dass** die Datenschnittstelle (13) eine Schnittstellenvorrichtung (20) aufweist, in welcher
- ein Schnittstellenspeicher (21),
- ein Steuermittel (22) zur Bereitstellung einer Versorgungsspannung (23a,23b) für die Schnittstellenvorrichtung (20),
- eine Funkeinheit (24) mit einem Antennenanschluss (25),
- eine Gleichrichtereinheit (26) und
- eine Antennenanordnung (27) betrieben wird,
wobei die an die Antennenanordnung (27) angeschlossene Funkeinheit (24) derart betrieben wird, dass ein über die Antennenanordnung (27) empfangenes Wechselsignal der Gleichrichtereinheit (26) zugeführt wird, welche das Wechselsignal gleichrichtet und mittels des Steuermittels (22) der Schnittstellenvorrichtung (20) eine autarke, interne Versorgungsspannung (23a) zur Verfügung stellt.

9. Verfahren nach Anspruch 8, wobei aus dem Schnittstellenspeicher (21) durch die Aufbereitung der autarken, internen Versorgungsspannung (23a) Identifikations-Daten und/oder Wartungs-Daten (30) ausgelesen werden, wobei zumindest eine der folgenden Datenarten ausgelesen wird,
- Bestellnummer (31),
- eindeutige Seriennummer (32),
- Ausgabestand (33),
- Einbaudatum (34),
- Anlagenkennzeichen (35),
- Klemmenbelegungsplan von Aus-/Eingangsklemmen der Komponente (36),
- Diagnosedaten (37).

10. Verfahren nach Anspruch 8 oder 9, wobei über die Antennenanordnung (27) eine drahtlose Kommunikation zwischen einem tragbaren elektronischen Gerät (40) mit einer Gegenantenne (41) ausschließlich in einem Annäherungsbereich (R)von maximal 10 cm durchgeführt wird.

11. Verfahren nach einem der Ansprüche 8 bis 10, wobei die Funkeinheit (24) mit einem Übertragungsprotokoll (28) nach dem Standard ISO 15963 und ISO 18000-3 betrieben wird.

12. Verfahren nach einem der Ansprüche 9 bis 11, wobei durch das Auslesen der eindeutigen Seriennummer (32) mit dem tragbaren elektronischen Gerät (40) und einem Vergleich der eindeutigen Seriennummer (32) mit einem einen ersten Hersteller zugewiesenen Nummernband (42) von Seriennummern, welches in dem tragbaren Gerät (40) hinterlegt wird, eine Aussage darüber getroffen wird, ob es sich um eine Komponente von dem ersten Hersteller oder um eine Komponente von einem zweiten Hersteller handelt.

13. Verfahren nach einem der Ansprüche 8 bis 12, wobei das tragbare elektronische Gerät (40) als ein virtuelles Display zu der Komponente genutzt wird und mit dem Display eine Programmier- und/oder Parametrier-Schnittstelle zwischen einem Anwender und der Komponente nachgebildet wird.
